# EUROPEAN PATENT SPECIFICATION

(11) **EP 3 506 031 B1**
(45) Date of publication and mention of the grant of the patent: **10.05.2023**
(21) Application number: 16914384.9
(22) Date of filing: 07.09.2016
(51) Int. Cl.: G05B 15/02

(54) **SMART HOUSEHOLD CONTROL METHOD AND SYSTEM**
INTELLIGENTES HAUSHALTSSTEUERUNGSVERFAHREN UND SYSTEM
PROCÉDÉ ET SYSTÈME DE COMMANDE DOMESTIQUES INTELLIGENTS

(30) Priority: 27.08.2016 CN 201610744422
(43) Date of publication of application: 03.07.2019
(73) Proprietor: Beijing VRV Software Corporation Limited, Beijing 100081 (CN)
(72) Inventor: LIN, Hao, Beijing 100081 (CN); ZHONG, Li, Beijing 100081 (CN)
(74) Representative: Ponti & Partners, S.L.P
(86) International application number: PCT/CN2016/000513
(87) International publication number: WO 2018/039814

(56) References cited:
- CN-A- 102 413 182
- CN-A- 104 330 974
- CN-A- 105 159 133
- CN-A- 105 159 133
- CN-A- 105 357 298
- CN-A- 105 357 298
- CN-A- 105 739 317
- CN-A- 105 739 317
- CN-U- 204 719 430
- US-A1- 2006 109 966
- US-A1- 2014 141 743

## Description

### Technical Field

The present disclosure relates to the field of smart household, particularly to a smart household control method, and system.

### Background Art

With the development of technologies of mobile internet and Internet of Things, people will be able to interact with their smart household devices no matter where they are. For a smart household, various devices (such as audio and video devices, lighting systems, curtain control, air conditioning control, security systems, digital cinema systems, audio and video servers, video cabinet systems, and network appliances) in the home are connected together using the technology of Internet of Things, to provide a plurality of functions and means such as appliance control, lighting control, telephone remote control, indoor and outdoor remote control, burglar alarm, environmental monitoring, heating and ventilation control, infrared repeater, and programmable timing control. Compared with a common home household, the smart household not only has the conventional function for dwelling, but also possesses functions for building, network communication, information appliances, device automation, and providing all-around information interactions, and the smart household even can also economize money on a variety of energy charges.

In recent years, smart household robot technologies and products emerge one after another, and the smart household robot can be used as a module of a smart hardware device or appliance for controlling various smart household devices. However, the control of the smart household robot over the smart household devices still stays on an outdated instruction level of control, with quite simple interaction information, while smart characteristics thereof are more embodied in an addition of various sensors to these devices, such as temperature sensors and distance sensors.

US 2006/109966 A1 discloses the features of the preamble of claim 1.

CN 105 739 317 A, CN 105 159 133 A, and CN 105 357 298 A disclose respective smart household control systems and methods, none of which includes the establishment, neither by the servers of those systems nor by any other entity thereof, of a communication group comprising at least one mobile terminal and at least one smart household device.

### Summary

In view of this, an object of the present disclosure is to provide a smart household control method, and system, so as to strive to solve or at least alleviate the foregoing existing problems.

In a first aspect, the present invention refers to a smart household control method as defined in claim 1.

Optionally, in the smart household control method according to the present disclosure, the first communication information and the second communication information are text information and/or voice information expressed in a manner of natural language.

Optionally, in the smart household control method according to the present disclosure, the control list further comprises setting of whether the user is allowed to control the respective smart household device.

Optionally, in the smart household control method according to the present disclosure, the first communication information further comprises a user communication identifier, and the communication group corresponding to the communication group identifier comprises at least one user and at least one smart household device.

Optionally, in the smart household control method according to the present disclosure, the step of sending the control instruction to a corresponding smart household device further comprises:
inquiring the control list, according to the user communication identifier and the communication group identifier, to determine whether a user corresponding to the user communication identifier is allowed to operate the respective smart household device in the communication group, and sending the control instruction to a smart household device in the communication group that the user is allowed to operate.

Optionally, the smart household control method according to the present disclosure further comprises:
the smart household control apparatus searching in the control list for a smart household device associated with the smart household device according to the received status information of the smart household device, and sending a preset control instruction to a found smart household device, such that the found smart household device executes the preset control instruction, and returns its own status information after execution, to the smart household control apparatus.

In a second aspect, not being part of the present invention, embodiments of the present disclosure provide a smart household control apparatus, the apparatus comprising:
an information storage module, configured to store configuration information of at least one smart household device in a control list, wherein the configuration information of each of the at least one smart household device comprises a device communication identifier;
a communication module, configured to make the smart household control apparatus establish a second connection with a smart household control server after the smart household control apparatus establishes a first connection with each of the at least one smart household device, such that the smart household control server establishes a communication group comprising at least one mobile terminal and at least one smart household device, and send first communication information sent from each of the at least one mobile terminal and received in the communication group to the smart household control apparatus; and
an instruction processing module, configured to receive the first communication information, wherein the first communication information comprises control information and a communication group identifier, and the communication group identifier comprises the respective device communication identifier, parse the control information and generate a control instruction, and send the control instruction to a corresponding smart household device,
wherein the smart household device sends its own status information to the smart household control apparatus after executing the control instruction, the smart household control apparatus converts the status information to second communication information and sends the second communication information to the smart household control server, and the smart household control server sends the second communication information to a communication group corresponding to the communication group identifier.

Optionally, in the smart household control apparatus according to the present disclosure, not being part of the present invention, the first communication information and the second communication information are text information and/or voice information expressed in a manner of natural language.

Optionally, in the smart household control apparatus according to the present disclosure, not being part of the present invention, the control list further comprises setting of whether a user is allowed to control the respective smart household device.

Optionally, in the smart household control apparatus according to the present disclosure, not being part of the present invention, the first communication information further comprises a user communication identifier, and the communication group corresponding to the communication group identifier comprises at least one user and at least one smart household device.

Optionally, in the smart household control apparatus according to the present disclosure, not being part of the present invention, the instruction processing module is further configured to:
inquire the control list, according to the user communication identifier and the communication group identifier, to determine whether a user corresponding to the user communication identifier is allowed to operate the respective smart household device in the communication group, and send the control instruction to the respective smart household device in the communication group that the user is allowed to operate.

Optionally, in the smart household control apparatus according to the present disclosure, not being part of the present invention, the instruction processing module is further configured to:
search, in the control list, for a smart household device associated with the smart household device according to the received status information of the smart household device, and send a preset control instruction to a found smart household device, such that the found smart household device executes the preset control instruction, and returns its own status information after execution, to the smart household control apparatus.

In a third aspect, the present invention relates to a smart household control system as defined in claim 7.

Embodiments of the system of the third aspect are as defined in claims 8-12.

According to the technical solutions of the present disclosure, the users configure the smart household control apparatus, such that the at least one smart household device is connected to the smart household control apparatus via the network, to enable each of the at least one smart household device to become an independent account, thereby achieving an object of smart interaction between smart household devices and users.

In order to make the above objects, features, and advantages of the present disclosure more apparent and understandable, preferred embodiments are particularly illustrated below in cooperation with attached accompanying drawings to make following detailed description.

### Brief Description of Drawings

In order to more clearly illustrate technical solutions of embodiments of the present disclosure, accompanying drawings which are needed for the embodiments will be introduced briefly below. It should be understood that the accompanying drawings below merely show some embodiments of the present disclosure, therefore, they should not be considered as limiting the scope, and a person ordinarily skilled in the art still can obtain other relevant accompanying drawings according to these accompanying drawings, without using inventive efforts.
Fig. 1 shows a schematic diagram of a smart household control system provided in an embodiment of the present disclosure;
FIG. 2 shows a flow chart of a smart household control method provided in an embodiment of the present disclosure; and
FIG. 3 shows a structural schematic diagram of a smart household control apparatus of the smart household control system provided in an embodiment of the present disclosure.

### Detailed Description of Embodiments

In order to make objects, technical solutions, and advantages of the embodiments of the present disclosure clearer, the technical solutions in the embodiments of the present disclosure will be described clearly and completely below in conjunction with accompanying drawings in the embodiments of the present disclosure. Apparently, some but not all embodiments of the present disclosure are described. Generally, components in the embodiments of the present disclosure, as described and shown in the accompanying drawings herein, may be arranged and designed in various different configurations. Therefore, the detailed description below of the embodiments of the present disclosure provided in the accompanying drawings is not intended to limit the scope of the present disclosure claimed, but merely illustrates chosen embodiments of the present disclosure. All other embodiments obtained by a person skilled in the art based on the embodiments of the present disclosure without inventive efforts shall fall within the scope of protection of the present disclosure, as defined in the appended claims.

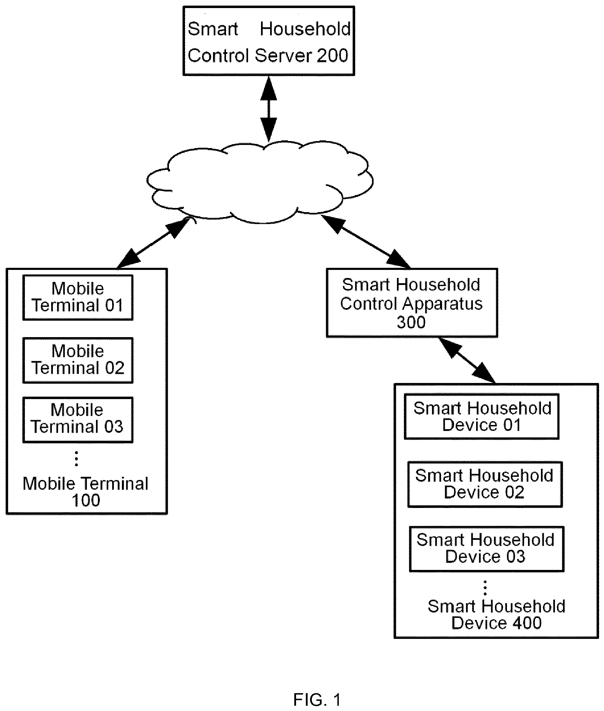

Fig. 1 shows a structural diagram of a smart household control system according to an embodiment of the present disclosure. As shown in FIG. 1, the smart household control system for accessing comprises: at least one mobile terminal 100, a smart household control server 200, a smart household control apparatus 300, and at least one smart household device 400.

The smart household control system in the present disclosure can help a user establish an intelligent smart household control network, and the user, no matter at home or in an office, can manipulate smart household devices efficiently and conveniently in a personified manner by using the network. The system generally comprises at least one mobile terminal 100 (e.g. mobile terminal 01, mobile terminal 02, mobile terminal 03 and so on) and at least one smart household device 400 (smart household device 01, smart household device 02, smart household device 03 and so on). The above at least one mobile terminal 100 may be in various types, such as devices like a smart cellphone, a tablet computer, etc. An instant communication application software or client (APP) for controlling the at least one smart household device is provided in each of the at least one mobile terminal 100. The at least one smart household device 400 generally includes smart television, smart air conditioner, smart lighting device, and smart curtain, etc. Each of the at least one smart household device 400 is provided therein with a network connection module, such that the respective smart household device can be connected to the smart household control apparatus 300 in a wired mode (e.g. optical fiber) or a wireless mode (e.g. WIFI). The smart household control apparatus 300 is also called as an access control device or gateway, and is usually a portable device, for example, it may be implemented as a part of a small-size portable (or mobile) electronic device. These electronic devices may be, such as, smart router, set-top box, game console, personal media player device, wireless network browsing device, application-specific device, or a hybrid device that may be provided with any of the above functions. After the at least one smart household device 400 is connected with the smart household control apparatus 300, the smart household control apparatus 300 registers an account for each accessed smart household device 400, and logs the above accounts in to the smart household control server 200 and communication between the at least one mobile terminal 100 and the at least one smart household device 400 can be realized. The smart household control server 200 mostly serves for realizing information sending and reception. However, it should be understood herein that the present disclosure is not limited by the functions or types of the server, and all servers that may realize the functions of the smart household control server in the present disclosure fall within the scope of protection of the present disclosure. Detailed description is made below.

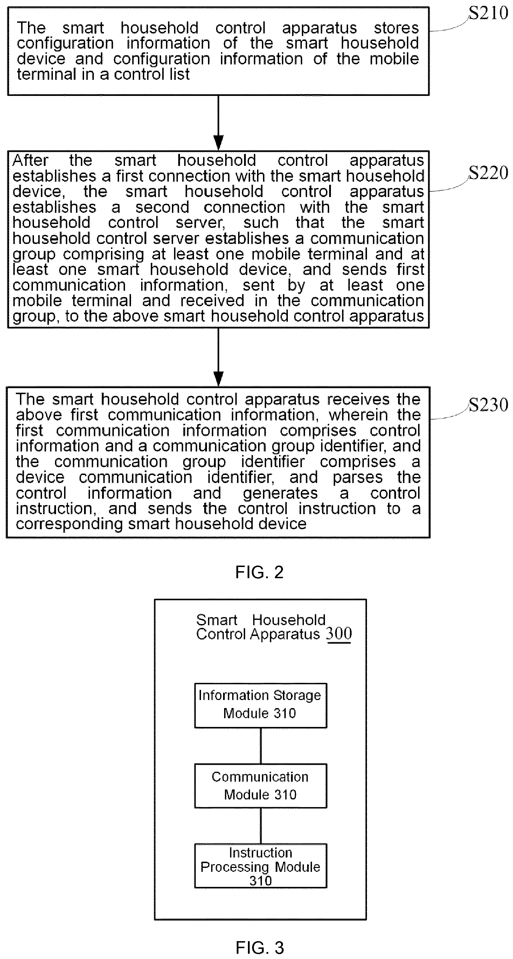

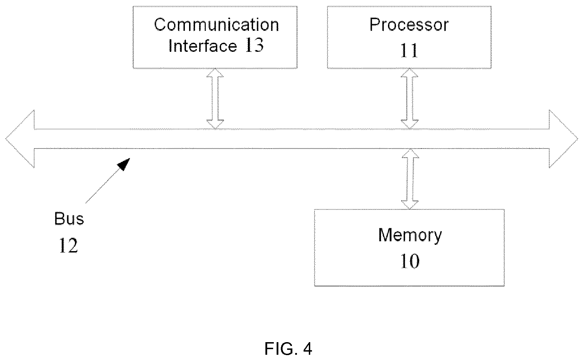

Fig. 2 shows a flow chart of a smart household control method provided in one embodiment of the present disclosure. As illustrated in FIG. 2, the smart household control method is implemented by a smart household control apparatus, i.e. implemented in the smart household control apparatus, and the implementation starts with Step S210.

In Step S210, the smart household control apparatus stores configuration information of the at least one smart household device and configuration information of the at least one mobile terminal in a control list, wherein the configuration information of each of the at least one smart household device includes a plurality of device communication identifiers and device attribute information and so on, and the configuration information of each of the at least one mobile terminal includes user account information and user communication identifier. Each device communication identifier may be an instant communication account of smart household.

Firstly, an administrator may configure the smart household control apparatus from a computing device, for example, an administrator may enter attribute information of the smart household device and so on. The attribute information generally includes the smart household device's name, model, installation position, network MAC address among others. Taking a smart air conditioner as example, entered attribute information of the smart air conditioner comprises Haier, KFR-35GW/15DEA22AU1, living room and so on.

The smart household control apparatus allocates a device communication identifier for each smart household device whose attribute information is entered. The device communication identifier is usually a random code. The identifier of each smart household device is unique. On the smart household control apparatus, one instant communication account of smart household is registered for each smart household device. Information on the instant communication account of smart household generally includes information such as account name and password, and each instant communication account of smart household further may be bound with a corresponding device communication identifier.

After having registered the information of the smart household device the administrator registers, for example, configuration information of a mobile terminal (the configuration information of the mobile terminal generally includes user communication identifier, user account information, login user name and so on) of a family user, and stores in the control list a setting concerning whether the user is allowed to operate the smart household device. According to an embodiment, the user communication identifier for example is a serial number of a mobile terminal device or a user account. The user communication identifier also exists uniquely. However, it should be understood herein that the user communication identifier is not limited to the serial number of the mobile terminal device, and all identifiers that can differentiate among users uniquely are within the scope of protection of the present disclosure.

The administrator may set in the control list whether each user is allowed to control the smart household device. A structure of the control list for example generally is: <User Communication Identifier, User Account, Device Communication Identifier, Instant Communication Account of Smart Household, Action (Allowed or Not Allowed)>. For example, a user A can control the smart air conditioner, but is not allowed to control the smart television, correspondingly, "Allowed" and "Not Allowed" are in corresponding action bars in the control list respectively.

In Step S220, after the smart household control apparatus establishes a first connection with each of the at least one smart household device, the smart household control apparatus establishes a second connection with the smart household control server, such that the smart household control server establishes a communication group comprising at least one mobile terminal and at least one smart household device, and sends first communication information, sent from each of the at least one mobile terminal and received in the communication group, to the above smart household control apparatus. In the above, the first connection generally comprises a wireless (WIFI) connection and a wired connection, and the second connection is a TCP) connection for example.

After the at least one smart household device is connected with the smart household control apparatus in a wireless or a wired mode, the smart household control apparatus logs in to the smart household control server using the information of the instant communication account of the respective smart household device, such that each of the at least one smart household device becomes an on-line robot.

The user may request to add one or more robots as friend or friends by using each of the at least one mobile terminal. After receiving the friend adding request from the respective mobile terminal, the smart household control server will inquire the setting recorded in the control list in the smart household control apparatus, which setting determines whether the user is allowed to operate the respective smart household device(s). If the user is allowed to operate the smart household device(s), then the smart household device(s) is(are) successfully added as friend(s), and after the friend adding succeeds, the above user further can establish a communication group which usually includes multiple users and multiple smart household devices. Taking an example in which the user A requesting to add a robot B corresponding to the smart air conditioner as a friend, the user A sends a friend request using the respective mobile terminal; after receiving the request, the server inquires the control list to determine whether the user A is allowed to operate the smart air conditioner corresponding to B, wherein if the user A is allowed to operate, the user A and the robot B become friends. The user A may also establish a group to add other users and robot users having friendship with the user per se to the same communication group.

After the communication is established between the at least one mobile terminal and the at least one smart household device on the smart household control server, each of the at least mobile terminal may be displayed to the user in a form of chat window. The chat windows may be for one-to-one chat, and also may be a group type chat window. The user inputs text information or voice information in the chat windows. Each of the at least one mobile terminal sends first communication information comprising the above voice information, to the smart household control server. The smart household control server further sends the above first communication information to the smart household control apparatus.

Next, in Step S230, the smart household control apparatus receives the above first communication information, wherein the first communication information includes control information and a communication group identifier, and the communication group identifier comprises the device communication identifier, and the smart household control apparatus parses the control information and generates a control instruction, and sends the control instruction to a corresponding smart household device.

After receiving the first communication information sent by the smart household control server, the smart household control apparatus converts the control information (e.g. voice information) in the first communication information and generates control instruction that can be identified by the at least one smart household device, then members of the communication group are identified according to the communication group identifier in the first communication information. The communication group generally comprises at least one user and at least one smart household device account. According to an embodiment, the smart household control apparatus inquires the control list, according to the communication group identifier and the device communication identifier, to determine whether a user corresponding to the above user communication identifier is allowed to operate the respective smart household device in the user group. If the user sending the information is allowed to operate the respective smart household device in the user group, the above control instruction is sent to the smart household device in the user group that the user is allowed to operate. In the above, the first communication information is text information and/or voice information expressed in a manner of natural language.

After executing the above control instruction, the smart household device sends its own status information to the smart household control apparatus, the smart household control apparatus converts the status information to second communication information and sends the second communication information to the smart household control server, and the smart household control server sends the second communication information to a communication group corresponding to the respective communication group identifier, wherein the second communication information is text information and/or voice information expressed in a manner of natural language, generally comprising operation status information and execution information of the smart household device itself.

In one embodiment, the user A and a smart air conditioner robot for example undertake a point-to-point chat. The user A inputs "Turn on the air conditioner, cooling mode, temperature 26 °C" from the mobile terminal. After receiving the above information, the smart household control server sends the above information to the smart household control apparatus which parses the above information, and generates control instruction, and sends the control instruction to the smart air conditioner. After executing the instruction, the smart air conditioner sends "Air conditioner turned on, cooling mode, set temperature 26 °C" to the smart household control apparatus. The smart household control apparatus further sends feedback information to the smart household control server, the smart air conditioner robot sends for example the information "Master, I am working perfectly. Cooling mode is already on. The temperature is set to 26 °C. If you still feel it's hot, please tell me!" to the mobile terminal. The above information is further displayed to the user A via the chat window of the mobile terminal.

In another embodiment, multiple users and multiple smart household device robots undertake a group chat. The group comprises the user A, the user B, and a user C, and the smart household devices include smart air conditioner, smart television, and smart lighting device. At this time, the user A inputs "Turn on the air conditioner, cooling mode, temperature 26 °C" in the chat window, the user B inputs "Turn on the television, switch to channel CCTV1", and the user C inputs "Turn on the lighting device". The server sends the above received information to the smart household control apparatus, which parses each piece of the received information, correspondingly generates corresponding control instruction, and searches in the control list, according to the user communication identifier and the device communication identifier in each piece of information, to determine whether the user is allowed to control the smart household devices in question. If the users A, B, and C are respectively allowed to control corresponding smart devices, the smart air conditioner, the smart television, and the smart lighting device execute corresponding control instructions. After the corresponding smart household devices execute the above instructions, they respectively return information "Air conditioner turned on, cooling mode, set temperature 26 °C", "Smart television turned on, switched to channel CCTV1", and "Smart lighting device turned on" to the smart household control apparatus. The smart household control apparatus further sends the status information of the above respective smart household devices to the smart household control server, and the robot accounts in the smart household control server which correspond to respective devices return corresponding information to respective mobile terminals.

According to another embodiment, the smart household control apparatus searches in the control list, according to the received status information of the smart household device, for the smart household device associated with the above smart household device, and sends a preset control instruction to a found smart household device, such that the found smart household device executes the preset control instruction, and returns its own status information after the execution to the smart household control apparatus, wherein the control list further comprises a smart household device associated with the smart household device, for example, a smart curtain associated with the smart lighting device and so on.

According to one embodiment, similarly, multiple users and multiple smart household device robots undertake a group chat. The group comprises the user A, the user B, and the user C, and the smart household devices include the smart curtain, the smart television, and the smart lighting device. When receiving information "Turn on the light" returned from the smart lighting device, the smart household control apparatus searches in the control list for a device associated with the smart lighting device, such as the smart curtain, and the smart household control apparatus sends a preset control instruction to the smart curtain, for example, "Close the smart curtain". After executing the above control instruction, the smart curtain sends status information "Smart curtain closed" to the smart household control apparatus. The smart household control apparatus transmits the information of the smart lighting device and the smart curtain to the smart household control server, which sends the above status information to various members in the communication group.

According to the technical solutions of the present disclosure, the users configure the smart household control apparatus, such that the at least one smart household device is connected to the smart household control apparatus via the network, to enable each of the at least one smart household device to become an independent account, thereby achieving an object of interaction between smart household devices and users.

Fig. 3 shows a structural schematic diagram of the smart household control apparatus of the smart household control system provided in one embodiment of the present disclosure. As shown in FIG. 3, the smart household control apparatus (i.e. smart household control apparatus) comprises: an information storage module 310, a communication module 320, and an instruction processing module 330.

The information storage module 310 is configured to store configuration information of at least one smart household device in the control list. The configuration information of each of the at least one smart household device comprises a device communication identifier. The configuration information of each of the at least one smart household device comprises information on the respective instant communication account of smart household. In the above, the configuration information of each of the at least one smart household device comprises the respective device communication identifier. The control list further comprises setting of whether a user is allowed to operate the respective smart household device.

The communication module 320 is configured to establish a second connection between the smart household control apparatus and the smart household control server after the smart household control apparatus establishes a first connection between the smart household control apparatus and each of the at least one smart household device, such that the smart household control server establishes a communication group comprising at least one mobile terminal and at least one smart household device, and sends the first communication information sent from each of the at least one mobile terminal and received in the communication group, to the smart household control apparatus.

The instruction processing module 330 is configured to receive the first communication information, wherein the first communication information comprises control information and the communication group identifier, and the communication group identifier comprises the device communication identifier; to parse the control information and generate the control instruction; and to send the control instruction to a corresponding smart household device. After executing the control instruction, the smart household device sends its own status information to the smart household control apparatus, which converts the status information to the second communication information and sends the second communication information to the smart household control server, and the smart household control server sends the second communication information to a communication group corresponding to the communication group identifier. In the above, the first communication information further comprises the user communication identifier, and the communication group corresponding to the communication group identifier comprises at least one user and at least one smart household device.

According to an embodiment, the instruction processing module inquires the control list, according to the user communication identifier and the communication group identifier, to determine whether a user corresponding to the user communication identifier is allowed to operate the respective smart household device in the communication group, and the instruction processing module sends the control instruction to the smart household device in the communication group that the user is allowed to operate.

According to an embodiment, the instruction processing module searches in the control list, according to the received status information of the smart household device, for a smart household device associated with the above smart household device, and sends preset control instruction to a found smart household device, such that the found smart household device executes the preset control instruction, and returns its own status information after the execution to the smart household control apparatus.

The smart household control apparatus provided in the embodiment of the smart household control system of the present disclosure may be specific hardware on a device or software, firmware or the like installed on a device. The apparatus provided in the embodiment of the smart household control system of the present disclosure has the same implementation principle of and technical effects produced as those in the preceding method embodiment, and for the sake of concise description, reference can be made to corresponding contents in the preceding method embodiment for contents which are not mentioned in the part of the apparatus of the smart household control system embodiment. A person skilled in the art can clearly know that for the sake of convenience and conciseness, reference can be made to corresponding processes in the above method embodiment for specific operation processes of the system, apparatus, and units described in the preceding, and they will not be repeated redundantly herein.

In the embodiments provided in the present disclosure, it should be understood that the system and the method disclosed may be implemented in other manners. The smart household control system embodiment described in the above is merely exemplary, for example, the units are merely divided according to logical functions, but they may be divided in other manners in practical implementation, for another example, multiple units or components may be combined or may be integrated into another system, or some features may be omitted, or not executed. In addition, mutual couplings or direct coupling or communication connection as shown or discussed may be indirect coupling or communication connection via some communication interfaces, means or units, and may be in an electrical form, a mechanical form or other forms.

The said units described as separate parts may be or also may not be physically separated, the parts displayed as units may be or also may not be physical units, i.e., they may be located at one place, or also may be distributed on a plurality of network units. The object of the solution of the present embodiment may be realized by selecting part or all of the units thereof as actually required.

Besides, various functional units in the embodiments of the present disclosure may be integrated into one processing unit, or each unit also may exist in a physically independent way, and two or more than two units also may be integrated into one unit.

If the function is realized in a form of software functional unit and is sold or used as an individual product, it may be stored in one computer readable storage medium. Based on such understanding, the technical solutions in essence or parts making contribution to the prior art or parts of the technical solutions of the present application can be embodied in form of a software product, and this computer software product is stored in a storage medium, comprising several instructions for causing one computer device (which can be a personal computer, a server or a network device etc.) to execute all or part of the steps of the methods of various examples of the present application. The aforementioned storage medium comprises various media in which program codes can be stored, such as U disk, mobile hard disk, Read-Only Memory (ROM), Random Access Memory (RAM), diskette and compact disk.

It should be noted that similar reference signs and letters represent similar items in the following accompanying drawings, therefore, once a certain item is defined in one accompanying drawing, it is not needed to be further defined or explained in subsequent accompanying drawings. Besides, terms such as "first", "second", and "third" are merely for distinctive description, but should not be construed as indicating or implying relative importance.

## Claims

1. A smart household control method, comprising steps of:
a smart household control apparatus (300) storing configuration information of a plurality of smart household devices (400; 01, 02, 03) in a control list, wherein the configuration information of each of the plurality of smart household devices (400; 01, 02, 03) comprises a device communication identifier;
the smart household control apparatus (300) establishing a first connection with at least one smart household device (400; 01, 02, 03) of the plurality of smart household devices (400; 01, 02, 03), and then establishing a second connection with a smart household control server (200);
the smart household control server (200) establishing, once said first and second connections have been established, a communication group comprising at least one mobile terminal (100) and at least one smart household device (400; 01, 02, 03) of said plurality of smart household devices (400; 01, 02, 03);
**characterized in that** said at least one mobile terminal is at least one mobile terminal of a plurality of mobile terminals (100), **in that** the smart household control server (200) is configured to establish said communication group with at least one of said plurality of mobile terminals (100) and at least one of said plurality of smart household devices (400; 01, 02, 03), and **in that** the method further comprises:
the smart household control server (200) sending first communication information to the smart household control apparatus (300), wherein said first communication information is received by the smart household control server (200) from each of the at least one mobile terminal (100);
the smart household control apparatus (300) receiving the first communication information sent by the smart household control server (200), wherein the first communication information comprises control information and a communication group identifier, and said communication group identifier comprises said device communication identifier;
the smart household control apparatus (300) parsing said control information and generating a control instruction, and sending said control instruction to a corresponding smart household device (400; 01, 02, 03);
said corresponding smart household device (400; 01, 02, 03) receiving said control instruction from the smart household control apparatus (300), executing the received control instruction, and then sending its own status information to the smart household control apparatus (300);
the smart household control apparatus (300) receiving said own status information and converting the same to second communication information and sending said second communication information to the smart household control server (200); and
the smart household control server (200) receiving the second communication information and sending the same to a communication group corresponding to the communication group identifier.

2. The smart household control method according to claim 1, wherein the first communication information and the second communication information are text information and/or voice information expressed in a manner of natural language.

3. The smart household control method according to claim 1 or 2, wherein the control list further comprises setting of whether the user is allowed to control the respective smart household device (400).

4. The smart household control method according to any one of claims 1-3, wherein the first communication information further comprises a user communication identifier, and the communication group corresponding to the communication group identifier comprises at least one user and at least one smart household device (400).

5. The smart household control method according to any one of claims 1-3, wherein the step of sending the control instruction to a corresponding smart household device (400) further comprises:
inquiring the control list, according to a user communication identifier and the communication group identifier, to determine whether a user corresponding to the user communication identifier is allowed to operate the respective smart household device (400) in the communication group, and sending the control instruction to a smart household device (400) in the communication group that the user is allowed to operate.

6. The smart household control method according to any one of claims 1-3, further comprising:
the smart household control apparatus (300) searching in the control list for a smart household device (400) associated with the smart household device (400) according to the received status information of the smart household device (400), and sending a preset control instruction to a found smart household device (400), such that the found smart household device (400) executes the preset control instruction, and returns its own status information after execution, to the smart household control apparatus (300).

7. A smart household control system, comprising:
- at least one mobile terminal (100),
- a plurality of smart household devices (400; 01, 02, 03),
- a smart household control server (200):
- a smart household control apparatus (300) configured to establish a first connection with at least one smart household device (400; 01, 02, 03) of the plurality of smart household devices (400; 01, 02, 03), and then establishing a second connection with said smart household control server (200),
wherein said smart household control server (200) is configured to establish, once said first and second connections have been established, a communication group comprising at least one mobile terminal and at least one smart household device (400; 01, 02, 03) of said plurality of smart household devices (400; 01, 02, 03), and
**characterized**
**in that** the system comprises a plurality of mobile terminals (100), wherein said at least one mobile terminal (100) is at least one mobile terminal of said plurality of mobile terminals (100);
**in that** the at least one mobile terminal (100) is configured to send first communication information to the smart household control server (200) through the established communication group;
**in that** the smart household control apparatus (300)comprises:
an information storage module, configured to store configuration information of said plurality of smart household devices (400; 01, 02, 03) in a control list, wherein the configuration information of each of the plurality of smart household devices (400; 01, 02, 03) comprises a device communication identifier;
a communication module, configured to establish said first connection between the smart household control apparatus (300) and said at least one smart household device (400; 01, 02, 03), and then establish said second connection between the smart household control apparatus (300) and said smart household control server (200), to allow the smart household control server (200) to establish said communication group;
wherein the smart household control apparatus (300) is configured to allow the smart household control server (200):
- to establish said communication group with at least one of said plurality of mobile terminals (100) and at least one of said plurality of smart household devices (400; 01, 02, 03), and
- to send first communication information to the smart household control apparatus (300), wherein said first communication information is received by the smart household control server (200) from each of the at least one mobile terminal (100);
wherein the smart household control apparatus (300) further comprises an instruction processing module, configured:
- to receive the first communication information sent by the smart household control server (200), wherein the first communication information comprises control information and a communication group identifier, and said communication group identifier comprises said device communication identifier,
- to parse said control information and to generate a control instruction, and to send said control instruction to a corresponding smart household device (400; 01, 02, 03), wherein said control instruction is configured to make the smart household device (400), which is configured to do so, after executing the control instruction, send its own status information to the smart household control apparatus (300);
wherein the smart household control apparatus (300) is configured to receive said own status information, to convert the same to second communication information, and to send said second communication information to the smart household control server (200), to allow the smart household control server (200) to send the received second communication information to a communication group corresponding to the communication group identifier; and
**in that** the smart household control server (200) is configured:
- to establish said communication group with at least one of said plurality of mobile terminals (100) and at least one of the plurality of smart household devices (400; 01, 02, 03), and to send the first communication information, sent from each of the at least one mobile terminal (100), to the smart household control apparatus (300); and
- to receive the second communication information sent by the smart household control apparatus (300), and to send the second communication information to a communication group corresponding to the communication group identifier.

8. The smart household control system according to claim 7, wherein the first communication information and the second communication information are text information and/or voice information expressed in a manner of natural language.

9. The smart household control system according to claim 7 or 8, wherein the control list further comprises setting of whether a user is allowed to control the respective smart household device (400).

10. The smart household control system according to any one of claims 7-9, wherein the first communication information further comprises a user communication identifier, and the communication group corresponding to the communication group identifier comprises at least one user and at least one smart household device (400).

11. The smart household control system according to any one of claims 7-10, wherein the instruction processing module of the smart household control apparatus (300) is further configured to:
inquire the control list, according to the user communication identifier and the communication group identifier, to determine whether a user corresponding to the user communication identifier is allowed to operate the respective smart household device (400) in the communication group, and send the control instruction to the respective smart household device (400) in the communication group that the user is allowed to operate.

12. The smart household control system according to any one of claims 7-10, wherein the instruction processing module of the smart household control apparatus (300) is further configured to:
search, in the control list, for a smart household device (400) associated with the smart household device (400) according to the received status information of the smart household device (400), and send a preset control instruction to a found smart household device (400), such that the found smart household device (400) executes the preset control instruction, and returns its own status information after execution, to the smart household control apparatus (300).

## Patentansprüche

1. Intelligentes Haushaltssteuerverfahren, das die Schritte umfasst:
eine intelligente Haushaltssteuervorrichtung (300) speichert Konfigurationsinformationen mehrerer intelligenter Haushaltsvorrichtungen (400; 01, 02, 03) in einer Steuerliste, wobei die Konfigurationsinformationen jeder der mehreren intelligenten Haushaltsvorrichtungen (400; 01, 02, 03) eine Vorrichtungskommunikationskennung umfassen;
die intelligente Haushaltssteuervorrichtung (300) baut eine erste Verbindung mit wenigstens einer intelligenten Haushaltsvorrichtung (400; 01, 02, 03) der mehreren intelligenten Haushaltsvorrichtungen (400; 01, 02, 03) auf und baut dann eine zweite Verbindung mit einem intelligenten Haushaltssteuer-Server (200) auf;
der intelligente Haushaltssteuer-Server (200) baut, sobald die erste und die zweite Verbindung aufgebaut worden sind, eine Kommunikationsgruppe auf, die wenigstens ein mobiles Endgerät (100) und wenigstens eine intelligente Haushaltsvorrichtung (400; 01, 02, 03) der mehreren intelligenten Haushaltsvorrichtungen (400; 01, 02, 03) umfasst;
**dadurch gekennzeichnet, dass** das wenigstens eine mobile Endgerät wenigstens ein mobiles Endgerät mehrerer mobiler Endgeräte (100) ist, dass der intelligente Haushaltssteuer-Server (200) konfiguriert ist, die Kommunikationsgruppe mit wenigstens einem der mehreren mobilen Endgeräte (100) und wenigstens einer der intelligenten Haushaltsvorrichtungen (400; 01, 02, 03) aufzubauen, und dass das Verfahren ferner umfasst:
der intelligente Haushaltssteuer-Server (200) sendet erste Kommunikationsinformationen an die intelligente Haushaltssteuervorrichtung (300), wobei die ersten Kommunikationsinformationen durch den intelligenten Haushaltssteuer-Server (200) von jedem des wenigstens einen mobilen Endgeräts (100) empfangen werden;
die intelligente Haushaltssteuervorrichtung (300) empfängt die durch den intelligenten Haushaltssteuer-Server (200) gesendeten ersten Kommunikationsinformationen, wobei die ersten Kommunikationsinformationen Steuerinformationen und eine Kommunikationsgruppenkennung umfassen und die Kommunikationsgruppenkennung die Vorrichtungskommunikationskennung umfasst;
die intelligente Haushaltssteuervorrichtung (300) führt ein Parsen der Steuerinformationen aus und erzeugt eine Steueranweisung und sendet die Steueranweisung an eine entsprechende intelligente Haushaltsvorrichtung (400; 01, 02, 03);
die entsprechende intelligente Haushaltsvorrichtung (400; 01, 02, 03) empfängt die Steueranweisung von der intelligenten Haushaltssteuervorrichtung (300), führt die empfangene Steueranweisung aus und sendet dann ihre eigenen Statusinformationen an die intelligente Haushaltssteuervorrichtung (300);
die intelligente Haushaltssteuervorrichtung (300) empfängt die eigenen Statusinformationen und wandelt dieselben in zweite Kommunikationsinformationen um und sendet die zweiten Kommunikationsinformationen an den intelligenten Haushaltssteuer-Server (200); und
der intelligente Haushaltssteuer-Server (200) empfängt die zweiten Kommunikationsinformationen und sendet diese an eine Kommunikationsgruppe, die der Kommunikationsgruppenkennung entspricht.

2. Intelligentes Haushaltssteuerverfahren nach Anspruch 1, wobei die ersten Kommunikationsinformationen und die zweiten Kommunikationsinformationen Textinformationen und/oder Sprachinformationen sind, die in einer Art natürlicher Sprache ausgedrückt sind.

3. Intelligentes Haushaltssteuerverfahren nach Anspruch 1 oder 2, wobei die Steuerliste ferner eine Einstellung umfasst, ob dem Anwender erlaubt ist, die jeweilige intelligente Haushaltsvorrichtung (400) zu steuern.

4. Intelligentes Haushaltssteuerverfahren nach einem der Ansprüche 1-3, wobei die ersten Kommunikationsinformationen ferner eine Anwenderkommunikationskennung umfassen und die Kommunikationsgruppe, die der Kommunikationsgruppenkennung entspricht, wenigstens einen Anwender und wenigstens eine intelligente Haushaltsvorrichtung (400) umfasst.

5. Intelligentes Haushaltssteuerverfahren nach einem der Ansprüche 1-3, wobei der Schritt des Sendens der Steueranweisung an eine entsprechende intelligente Haushaltsvorrichtung (400) ferner umfasst:
Abfragen der Steuerliste gemäß einer Anwenderkommunikationskennung und der Kommunikationsgruppenkennung, um zu bestimmen, ob einem Anwender, der der Anwenderkommunikationskennung entspricht, erlaubt ist, die jeweilige intelligente Haushaltsvorrichtung (400) in der Kommunikationsgruppe zu bedienen, und Senden der Steueranweisung an eine intelligente Haushaltsvorrichtung (400) in der Kommunikationsgruppe, die der Anwender bedienen darf.

6. Intelligentes Haushaltssteuerverfahren nach einem der Ansprüche 1-3, umfassend:
die intelligente Haushaltssteuervorrichtung (300) sucht in der Steuerliste nach einer intelligenten Haushaltsvorrichtung (400), die der intelligenten Haushaltsvorrichtung (400) gemäß den empfangenen Statusinformationen der intelligenten Haushaltsvorrichtung (400) zugeordnet ist, und sendet eine vorgegebene Steueranweisung an eine gefundene intelligente Haushaltsvorrichtung (400), so dass die gefundene intelligente Haushaltsvorrichtung (400) die vorgegebene Steueranweisung ausführt und ihre eigenen Statusinformationen nach der Ausführung an die intelligente Haushaltssteuervorrichtung (300) zurückschickt.

7. Intelligentes Haushaltssteuersystem, umfassend:
- wenigstens ein mobiles Endgerät (100);
- mehrere intelligente Haushaltsvorrichtungen (400; 01, 02, 03);
- einen intelligenten Haushaltssteuer-Server (200);
- eine intelligente Haushaltssteuervorrichtung (300), die konfiguriert ist, eine erste Verbindung mit wenigstens einer intelligenten Haushaltsvorrichtung (400; 01, 02, 03) der mehreren intelligenten Haushaltsvorrichtungen (400; 01, 02, 03) aufzubauen und dann eine zweite Verbindung mit dem intelligenten Haushaltssteuer-Server (200) aufzubauen,
wobei der intelligente Haushaltssteuer-Server (200) konfiguriert ist, sobald die erste und die zweite Verbindung aufgebaut worden sind, eine Kommunikationsgruppe aufzubauen, die wenigstens ein mobiles Endgerät (100) und wenigstens eine intelligente Haushaltsvorrichtung (400; 01, 02, 03) der mehreren intelligenten Haushaltsvorrichtungen (400; 01, 02, 03) umfasst, und
**dadurch gekennzeichnet,**
**dass** das System mehrere mobile Endgeräte (100) umfasst, wobei das wenigstens eine mobile Endgerät (100) wenigstens ein mobiles Endgerät der mehreren mobilen Endgeräte (100) ist;
**dass** das wenigstens eine mobile Endgerät (100) konfiguriert ist, erste Kommunikationsinformationen durch die aufgebaute Kommunikationsgruppe an den intelligenten Haushaltssteuer-Server (200) zu senden;
**dass** die intelligente Haushaltssteuervorrichtung (300) umfasst:
ein Informationsspeichermodul, das konfiguriert ist, Kommunikationsinformationen der mehreren intelligenten Haushaltsvorrichtungen (400; 01, 02, 03) in einer Steuerliste zu speichern, wobei die Kommunikationsinformationen jeder der mehreren intelligenten Haushaltsvorrichtungen (400; 01, 02, 03) eine Vorrichtungskommunikationskennung umfassen;
ein Kommunikationsmodul, das konfiguriert ist, die erste Verbindung zwischen der intelligenten Haushaltssteuervorrichtung (300) und der wenigstens einen intelligenten Haushaltsvorrichtung (400; 01, 02, 03) aufzubauen und dann die zweite Verbindung zwischen der intelligenten Haushaltssteuervorrichtung (300) und dem intelligenten Haushaltssteuer-Server (200) aufzubauen, um dem intelligenten Haushaltssteuer-Server (200) zu ermöglichen, die Kommunikationsgruppe aufzubauen;
wobei die intelligente Haushaltssteuervorrichtung (300) konfiguriert ist, dem intelligenten Haushaltssteuer-Server (200) zu ermöglichen:
- die Kommunikationsgruppe mit wenigstens einem der mehreren mobilen Endgeräte (100) und wenigstens einer der mehreren intelligenten Haushaltsvorrichtungen (400; 01, 02, 03) aufzubauen, und
- erste Kommunikationsinformationen an die intelligente Haushaltssteuervorrichtung (300) zu senden, wobei die ersten Kommunikationsinformationen durch den intelligenten Haushaltssteuer-Server (200) von jedem des wenigstens einen mobilen Endgeräts (100) empfangen werden;
wobei die intelligente Haushaltssteuervorrichtung (300) ferner ein Anweisungsverarbeitungsmodul umfasst, das konfiguriert ist:
- die durch den intelligenten Haushaltssteuer-Server (200) gesendeten ersten Kommunikationsinformationen zu empfangen, wobei die ersten Kommunikationsinformationen Steuerinformationen und eine Kommunikationsgruppenkennung umfassen und die Kommunikationsgruppenkennung die Vorrichtungskommunikationskennung umfasst,
- an den Steuerinformationen ein Parsen auszuführen und eine Steueranweisung zu erzeugen und die Steueranweisung an eine entsprechende intelligente Haushaltsvorrichtung (400; 01, 02, 03) zu senden, wobei die Steueranweisung konfiguriert ist, die intelligente Haushaltsvorrichtung (400), die konfiguriert ist, dies auszuführen, zu veranlassen, nach dem Ausführen der Steueranweisung ihre eigenen Statusinformationen an die intelligente Haushaltssteuervorrichtung (300) zu senden;
wobei die intelligente Haushaltssteuervorrichtung (300) konfiguriert ist, die eigenen Statusinformationen zu empfangen, dieselben in zweite Kommunikationsinformationen umzuwandeln und die zweiten Kommunikationsinformationen an den intelligenten Haushaltssteuer-Server (200) zu senden, um dem intelligenten Haushaltssteuer-Server (200) zu ermöglichen, die empfangenen zweiten Kommunikationsinformationen an eine Kommunikationsgruppe zu senden, die der Kommunikationsgruppenkennung entspricht; und
**dass** der intelligente Haushaltssteuer-Server (200) konfiguriert ist:
- die Kommunikationsgruppe mit wenigstens einem der mehreren mobilen Endgeräte (100) und wenigstens einer der mehreren intelligenten Haushaltsvorrichtungen (400; 01, 02, 03) aufzubauen und die ersten Kommunikationsinformationen, die von jedem des wenigstens einen mobilen Endgeräts (100) gesendet werden, an die intelligente Haushaltssteuervorrichtung (300) zu senden; und
- die durch die intelligente Haushaltssteuervorrichtung (300) gesendeten zweiten Kommunikationsinformationen zu empfangen und die zweiten Kommunikationsinformationen an eine Kommunikationsgruppe zu senden, die der Kommunikationsgruppenkennung entspricht.

8. Intelligentes Haushaltssteuersystem nach Anspruch 7, wobei die ersten Kommunikationsinformationen und die zweiten Kommunikationsinformationen Textinformationen und/oder Sprachinformationen sind, die in einer Art natürlicher Sprache ausgedrückt sind.

9. Intelligentes Haushaltssteuersystem nach Anspruch 7 oder 8, wobei die Steuerliste ferner eine Einstellung umfasst, ob einem Anwender erlaubt ist, die jeweilige intelligente Haushaltsvorrichtung (400) zu steuern.

10. Intelligentes Haushaltssteuersystem nach einem der Ansprüche 7-9, wobei die ersten Kommunikationsinformationen ferner eine Anwenderkommunikationskennung umfassen und die Kommunikationsgruppe, die der Kommunikationsgruppenkennung entspricht, wenigstens einen Anwender und wenigstens eine intelligente Haushaltsvorrichtung (400) umfasst.

11. Intelligentes Haushaltssteuersystem nach einem der Ansprüche 7-10, wobei das Anweisungsverarbeitungsmodul der intelligenten Haushaltssteuervorrichtung (300) ferner konfiguriert ist:
die Steuerliste gemäß einer Anwenderkommunikationskennung und der Kommunikationsgruppenkennung abzufragen, um zu bestimmen, ob einem Anwender, der der Anwenderkommunikationskennung entspricht, erlaubt ist, die jeweilige intelligente Haushaltsvorrichtung (400) in der Kommunikationsgruppe zu bedienen, und die Steueranweisung an die jeweilige intelligente Haushaltsvorrichtung (400) in der Kommunikationsgruppe, die der Anwender bedienen darf, zu senden.

12. Intelligentes Haushaltssteuersystem nach einem der Ansprüche 7-10, wobei das Anweisungsverarbeitungsmodul der intelligenten Haushaltssteuervorrichtung (300) ferner konfiguriert ist:
in der Steuerliste nach einer intelligenten Haushaltsvorrichtung (400) zu suchen, die der intelligenten Haushaltsvorrichtung (400) gemäß den empfangenen Statusinformationen der intelligenten Haushaltsvorrichtung (400) zugeordnet ist, und eine vorgegebene Steueranweisung an eine gefundene intelligente Haushaltsvorrichtung (400) zu senden, so dass die gefundene intelligente Haushaltsvorrichtung (400) die vorgegebene Steueranweisung ausführt und ihre eigenen Statusinformationen nach der Ausführung an die intelligente Haushaltssteuervorrichtung (300) zurückschickt.

## Revendications

1. Procédé de commande domestique intelligent, comprenant les étapes suivantes :
un appareil de commande domestique intelligent (300) stocke des informations de configuration d'une pluralité de dispositifs domestiques intelligents (400 ; 01, 02, 03) dans une liste de commande, dans lequel les informations de configuration de chacun de la pluralité de dispositifs domestiques intelligents (400 ; 01, 02, 03) comprend un identificateur de communication de dispositif ;
l'appareil de commande domestique intelligent (300) établit une première connexion avec au moins un dispositif domestique intelligent (400 ; 01,02, 03) de la pluralité de dispositifs domestiques intelligents (400 ; 01, 02, 03), puis établit une seconde connexion avec un serveur de commande domestique intelligent (200) ;
le serveur de commande domestique intelligent (200) établit, une fois que lesdites première et seconde connexions ont été établies, un groupe de communication comprenant au moins un terminal mobile (100) et au moins un dispositif domestique intelligent (400 ; 01, 02, 03) de ladite pluralité de dispositifs domestiques intelligents (400 ; 01, 02, 03) ;
**caractérisé en ce que** ledit au moins un terminal mobile est au moins un terminal mobile d'une pluralité de terminaux mobiles (100), **en ce que** le serveur de commande domestique intelligent (200) est configuré pour établir ledit groupe de communication avec au moins un de ladite pluralité de terminaux mobiles (100) et au moins un de ladite pluralité de dispositifs domestiques intelligents (400 ; 01, 02, 03), et **en ce que** le procédé comprend en outre les opérations suivantes :
le serveur de commande domestique intelligent (200) envoie de premières informations de communication à l'appareil de commande domestique intelligent (300), dans lequel lesdites premières informations de communication sont reçues par le serveur de commande domestique intelligent (200) de chacun des au moins un terminal mobile (100) ;
l'appareil de commande domestique intelligent (300) reçoit les premières informations de communication envoyées par le serveur de commande domestique intelligent (200), dans lequel les premières informations de communication comprennent des informations de commande et un identificateur de groupe de communication, et ledit identificateur de groupe de communication comprend ledit identificateur de communication de dispositif ;
l'appareil de commande domestique intelligent (300) analyse lesdites informations de commande et génère une instruction de commande, et envoie ladite instruction de commande à un appareil domestique intelligent (400 ; 01, 02, 03) correspondant ;
ledit dispositif domestique intelligent (400 ; 01, 02, 03) correspondant reçoit ladite instruction de commande de l'appareil de commande domestique intelligent (300), exécute l'instruction de commande reçue, puis envoie ses propres informations d'état à l'appareil de commande domestique intelligent (300) ;
l'appareil de commande domestique intelligent (300) reçoit lesdites propres informations d'état, les convertit en secondes informations de communication et envoie lesdites secondes informations de communication au serveur de commande domestique intelligent (200) ; et
le serveur de commande domestique intelligent (200) reçoit les secondes informations de communication et les envoie à un groupe de communication correspondant à l'identificateur de groupe de communication.

2. Procédé de commande domestique intelligent selon la revendication 1, dans lequel les premières informations de communication et les secondes informations de communication sont des informations textuelles et/ou des informations vocales exprimées en langage naturel.

3. Procédé de commande domestique intelligent selon la revendication 1 ou 2, dans lequel la liste de commande comprend en outre le réglage de l'autorisation de l'utilisateur à commander le dispositif domestique intelligent (400) respectif.

4. Procédé de commande domestique intelligent selon l'une quelconque des revendications 1 à 3, dans lequel les premières informations de communication comprennent en outre un identificateur de communication de l'utilisateur, et le groupe de communication correspondant à l'identificateur de groupe de communication comprend au moins un utilisateur et au moins un dispositif domestique intelligent (400).

5. Procédé de commande domestique intelligent selon l'une quelconque des revendications 1 à 3, dans lequel l'étape d'envoi de l'instruction de commande à un dispositif ménager intelligent (400) correspondant comprend en outre :
l'interrogation de la liste de commande, en fonction d'un identificateur de communication de l'utilisateur et de l'identificateur de groupe de communication, pour déterminer si un utilisateur correspondant à l'identificateur de communication de l'utilisateur est autorisé à faire fonctionner le dispositif domestique intelligent (400) respectif dans le groupe de communication, et l'envoi de l'instruction de commande à un dispositif domestique intelligent (400) dans le groupe de communication que l'utilisateur est autorisé à faire fonctionner.

6. Procédé de commande domestique intelligent selon l'une quelconque des revendications 1 à 3, comprenant en outre les opérations suivantes :
l'appareil de commande domestique intelligent (300) recherche dans la liste de commande un dispositif domestique intelligent (400) associé au dispositif domestique intelligent (400) en fonction des informations d'état reçues du dispositif domestique intelligent (400), et envoie une instruction de commande prédéfinie à un dispositif domestique intelligent (400) trouvé, de sorte que le dispositif domestique intelligent (400) trouvé exécute l'instruction de commande prédéfinie, et renvoie ses propres informations d'état après exécution, à l'appareil de commande domestique intelligent (300).

7. Système de commande domestique intelligent, comprenant :
- au moins un terminal mobile (100),
- une pluralité de dispositifs de domestiques intelligents (400 ; 01, 02, 03) ;
- un serveur de commande domestique intelligent (200) :
- un appareil de commande domestique intelligent (300) configuré pour établir une première connexion avec au moins un dispositif domestique intelligent (400 ; 01, 02, 03) de la pluralité de dispositifs domestiques intelligents (400 ; 01, 02, 03), puis pour établir une seconde connexion avec ledit serveur de commande domestique intelligent (200),
dans lequel ledit serveur de commande domestique intelligent (200) est configuré pour établir, une fois que lesdites première et seconde connexions ont été établies, un groupe de communication comprenant au moins un terminal mobile et au moins un dispositif domestique intelligent (400 ; 01, 02, 03) de ladite pluralité de dispositifs domestiques intelligents (400 ; 01,02, 03,), et
**caractérisé**
**en ce que** le système comprend une pluralité de terminaux mobiles (100), dans lequel ledit au moins un terminal mobile (100) est au moins un terminal mobile de ladite pluralité de terminaux mobiles (100) ;
**en ce que** l'au moins un terminal mobile (100) est configuré pour envoyer de premières informations de communication au serveur de commande domestique intelligent (200) par l'intermédiaire du groupe de communication établi ;
**en ce que** l'appareil de commande domestique intelligent (300) comprend :
un module de stockage d'informations configuré pour stocker des informations de configuration de ladite pluralité de dispositifs domestiques intelligents (400 ; 01, 02, 03) dans une liste de commande, dans lequel les informations de configuration de chacun de la pluralité de dispositifs domestiques intelligents (400 ; 01, 02, 03) comprend un identificateur de communication de dispositif ;
un module de communication, configuré pour établir ladite première connexion entre l'appareil de commande domestique intelligent (300) et ledit au moins un dispositif domestique intelligent (400 ; 01, 02, 03), puis pour établir ladite seconde connexion entre l'appareil de commande domestique intelligent (300) et ledit serveur de commande domestique intelligent (200), afin de permettre au serveur de commande domestique intelligent (200) d'établir ledit groupe de communication ;
dans lequel l'appareil de commande domestique intelligent (300) est configuré pour permettre au serveur de commande domestique intelligent (200) :
- d'établir ledit groupe de communication avec au moins un de ladite pluralité de terminaux mobiles (100) et au moins un de ladite pluralité de dispositifs de commande domestiques intelligents (400 ; 01, 02, 03), et
- d'envoyer de premières informations de communication à l'appareil de commande domestique intelligent (300), dans lequel lesdites premières informations de communication sont reçues par le serveur de commande domestique intelligent (200) de chacun de l'au moins un terminal mobile (100) ;
dans lequel l'appareil de commande domestique intelligent (300) comprend en outre un module de traitement des instructions, configuré pour :
- recevoir les premières informations de communication envoyées par le serveur de commande domestique intelligent (200), dans lequel les premières informations de communication comprennent des informations de commande et un identificateur de groupe de communication, et ledit identificateur de groupe de communication comprend ledit identificateur de communication de dispositif ;
- analyser lesdites informations de commande et générer une instruction de commande, et envoyer ladite instruction de commande à un dispositif domestique intelligent (400 ; 01, 02, 03) correspondant, dans lequel ladite instruction de commande étant configurée pour que le dispositif domestique intelligent (400), qui est configuré pour cela, après avoir exécuté l'instruction de commande, envoie ses propres informations d'état à l'appareil de commande domestique intelligent (300) ;
dans lequel l'appareil de commande domestique intelligent (300) est configuré pour recevoir lesdites propres informations d'état, pour les convertir en secondes informations de communication et pour envoyer lesdites secondes informations de communication au serveur de commande domestique intelligent (200), afin de permettre au serveur de commande domestique intelligent (200) d'envoyer les secondes informations de communication reçues à un groupe de communication correspondant à l'identificateur de groupe de communication ; et
**en ce que** le serveur de commande domestique intelligent (200) est configuré pour :
- établir ledit groupe de communication avec au moins un de ladite pluralité de terminaux mobiles (100) et au moins un de la pluralité de dispositifs domestiques intelligents (400 ; 01, 02, 03), et envoyer les premières informations de communication, envoyées par chacun des au moins un terminaux mobiles (100), à l'appareil de commande domestique intelligent (300) ; et
- recevoir les secondes informations de communication envoyées par l'appareil de commande domestique intelligent (300) et envoyer les secondes informations de communication à un groupe de communication correspondant à l'identificateur de groupe de communication.

8. Système de commande domestique intelligent selon la revendication 7, dans lequel les premières informations de communication et les secondes informations de communication sont des informations textuelles et/ou des informations vocales exprimées en langage naturel.

9. Système de commande domestique intelligent selon la revendication 7 ou 8, dans lequel la liste de commande comprend en outre le réglage de l'autorisation d'un utilisateur à commander le dispositif domestique intelligent (400) respectif.

10. Système de commande domestique intelligent selon l'une quelconque des revendications 7 à 9, dans lequel les premières informations de communication comprennent en outre un identificateur de communication de l'utilisateur, et le groupe de communication correspondant à l'identificateur de groupe de communication comprend au moins un utilisateur et au moins un dispositif domestique intelligent (400).

11. Système de commande domestique intelligent selon l'une quelconque des revendications 7 à 10, dans lequel le module de traitement des instructions de l'appareil de commande domestique intelligent (300) est en outre configuré pour :
examiner la liste de commande, en fonction de l'identificateur de communication de l'utilisateur et de l'identificateur de groupe de communication, pour déterminer si un utilisateur correspondant à l'identificateur de communication de l'utilisateur est autorisé à faire fonctionner le dispositif domestique intelligent (400) respectif dans le groupe de communication, et envoyer l'instruction de commande au dispositif domestique intelligent (400) respectif dans le groupe de communication que l'utilisateur est autorisé à faire fonctionner.

12. Système de commande domestique intelligent selon l'une quelconque des revendications 7 à 10, dans lequel le module de traitement des instructions de l'appareil de commande domestique intelligent (300) est en outre configuré pour :
rechercher, dans la liste de commande, un dispositif domestique intelligent (400) associé au dispositif domestique intelligent (400) en fonction des informations d'état reçues du dispositif domestique intelligent (400), et envoyer une instruction de commande prédéfinie à un dispositif domestique intelligent (400) trouvé, de sorte que le dispositif domestique intelligent (400) trouvé exécute l'instruction de commande prédéfinie, et renvoie ses propres informations d'état après exécution, à l'appareil de commande domestique intelligent (300).
